# EUROPEAN PATENT SPECIFICATION

(11) **EP 4 361 793 B1**
(45) Date of publication and mention of the grant of the patent: **15.04.2026**
(21) Application number: 22203826.7
(22) Date of filing: 26.10.2022
(51) Int. Cl.: G06F 7/48, G06N 3/063

(54) **ENERGETICALLY EFFICIENT REPRESENTATION OF SIGNED INTEGER NON UNIFORM WEIGHTS**
ENERGETISCH EFFIZIENTE DARSTELLUNG UNGLEICHFÖRMIGER GEWICHTE VON GANZZAHLEN MIT VORZEICHEN
REPRÉSENTATION EFFICACE EN TERMES D'ÉNERGIE DE POIDS NON UNIFORMES ENTIERS SIGNÉS

(43) Date of publication of application: 01.05.2024
(73) Proprietor: Huawei Technologies Co., Ltd., Shenzhen, Guangdong 518129, (CN)
(72) Inventor: Shahar, Moshe, 80992 Munich (DE); Cohen, Ehud, 80992 Munich (DE)
(74) Representative: MERH-IP Matias Erny Reichl Hoffmann Patentanwälte PartG mbB

(56) References cited:
- US-A1- 2020 310 758
- WAEIJEN LUC ET AL: "Datawidth-Aware Energy-Efficient Multipliers: A Case for Going Sign Magnitude", 2018 21ST EUROMICRO CONFERENCE ON DIGITAL SYSTEM DESIGN (DSD), IEEE, 29 August 2018 (2018-08-29), pages 54 - 61, XP033420174, DOI: 10.1109/DSD.2018.00024
- WHATMOUGH PAUL N ET AL: "DNN Engine: A 28-nm Timing-Error Tolerant Sparse Deep Neural Network Processor for IoT Applications", IEEE JOURNAL OF SOLID-STATE CIRCUITS, IEEE, USA, vol. 53, no. 9, 1 September 2018 (2018-09-01), pages 2722 - 2731, XP011689333, ISSN: 0018-9200, [retrieved on 20180828], DOI: 10.1109/JSSC.2018.2841824

## Description

### BACKGROUND

Some embodiments described in the present disclosure relate to a machine learning model and, more specifically, but not exclusively, to storing non-uniformly distributed parameters in an energy efficient manner.

Machine learning models, such as neural networks, Bayesian networks, Markov random fields, and the like, may be executed using computer hardware such as central processing units, digital signal processors, graphic processing units, and/or other dedicated accelerators. The execution involves reading a large number of model parameters, such as biases and weights, from memory and using them to compute the inference. Weights may be stored in a "Two's complement" binary format as it is the native format used of many hardware devices. Reading the weights from external memory is a major contributor to the power consumption incurred by using machine learning models, due to the fact that reading large amount of data producers a large number of bit toggles which are the main power consumer in a hardware device. Many hardware technologies, notably complementary metal oxide semiconductor (CMOS) consume most of the energy during transitions.

Two's complement format is ubiquitously used to represent both positive and negative integer values. In most general compute workloads the two's complement format has the same bit toggle rate as other formats due to the uniform distribution nature of different data elements.

Document WAEIJEN LUC ET AL: "Datawidth-Aware Energy-Efficient Multipliers: A Case for Going Sign Magnitude", 29 AUGUST 2018, XP033420174 discloses using sign magnitude for multiplication.

Document WHATMOUGH PAUL N ET AL: "DNN Engine: A 28-nm Timing-Error Tolerant Sparse Deep Neural Network Processor for IoT Applications", 1 September 2018, XP011689333 discloses sign magnitude representation and addition/subtraction in sign magnitude.

US 2020/310758 A1 discloses computing the multiplication in sign-magnitude coding, and then reconverting the multiplication result in 2's complement before the accumulation step.

### SUMMARY

It is an object of the present disclosure to describe a method and a processing apparatus for reducing the energy consumption of machine learning model execution by storing parameters in sign magnitude format and converting the parameters to two's complement format in proximity to the arithmetic processing components.

The foregoing and other objects are achieved by the features of the independent claims. Further implementation forms are apparent from the dependent claims, the description and the figures.

According to an aspect of some embodiments of the present invention there is provided a processing apparatus as defined in appended claim 1.

According to an aspect of some embodiments of the present invention there is provided a method as defined in appended claim 5.

Optionally, the integer conversion module is directly connected to the at least one processing element.

Optionally, the negative representation of zero is an exception stored as is in the at least one memory.

Optionally, the sign magnitude to two's complement element detects the negative representation of zero and converts it to the maximal negative number.

Other systems, methods, features, and advantages of the present disclosure will be or become apparent to one with skill in the art upon examination of the following drawings and detailed description, without departing from the scope of the accompanying claims.

Unless otherwise defined, all technical and/or scientific terms used herein have the same meaning as commonly understood by one of ordinary skill in the art to which embodiments. Although methods and materials similar or equivalent to those described herein can be used in the practice or testing of embodiments, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWING(S)

Some embodiments are herein described, by way of example only, with reference to the accompanying drawings. With specific reference now to the drawings in detail, it is stressed that the particulars shown are by way of example and for purposes of illustrative discussion of embodiments. In this regard, the description taken with the drawings makes apparent to those skilled in the art how embodiments may be practiced.

In the drawings:
FIG. 1A is a schematic block diagram of some exemplary bit toggles on data wires, using two's complement, while executing a machine learning model, according to some embodiments of the present disclosure;
FIG. 1B is a schematic graph representing an exemplary distribution of weights values in a machine learning model, using two's complement, according to some embodiments of the present disclosure;
FIG. 2A is a schematic block diagram of some exemplary bit toggles on data wires, using sign magnitude, while executing a machine learning model, according to some embodiments of the present disclosure;
FIG. 2B is a schematic graph representing an exemplary distribution of weights values in a machine learning model, using sign magnitude, according to some embodiments of the present disclosure; and
FIG. 3 is a schematic block diagram of an exemplary data transmission, on an exemplary system executing a machine learning model, according to some embodiments of the present disclosure.

### DETAILED DESCRIPTION

Some embodiments described in the present disclosure relate to a machine learning model and, more specifically, but not exclusively, to a storing non-uniformly distributed parameters in an energy efficient manner.

For many machine learning models, such as neural networks (NN), weights, biases, and the like, may be distributed in a manner other than uniform distribution. Weight data set of NN may have non-uniform distribution centered on zero value, i.e. most weights are small compared to the maximum. When encoding a data set with non-uniform distribution in two's complement format the bit toggle rate may be high and since transitions may account for most of the power consumption of computing devices, it may be high as well.

Some embodiments of present disclosure aim to represent the non-uniform distributed weight data in sign magnitude format. This representation may reduce the bit toggle rate of the more significant bits and therefor reduce the power consumption. Statistics of some machine learning model types predict that the power consumption of the memory and electronical connection may be lower for sign magnitude format
Bit accurate sign magnitude representation of signed integer non-uniform weights may be used to reduce bit toggling and power consumption in NN inference on many hardware apparat.

Another benefit of reducing the power consumption is reduced heat emission, which may allow less investment in cooling, allow use of higher frequencies, and/or the like.

This disclosure may be used in other hardware implementation, where traffic of a non-uniformly distributed signed integer value is being transferred, such as data centers storing tables were high magnitude values are supported however scarce. This method can save power on the transfer between different memory elements.

Before explaining at least one embodiment in detail, it is to be understood that embodiments are not necessarily limited in its application to the details of construction and the arrangement of the components and/or methods set forth in the following description and/or illustrated in the drawings and/or the Examples. Implementations described herein are capable of other embodiments or of being practiced or carried out in various ways.

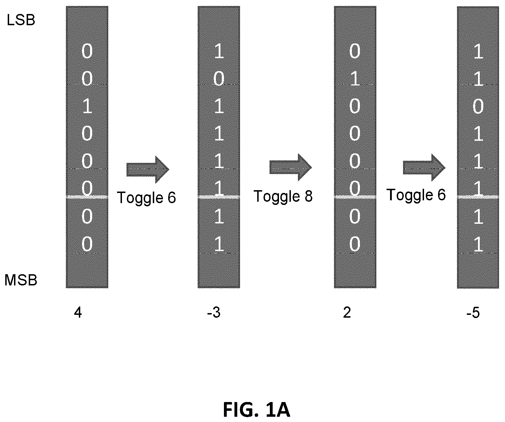

Reference is now made to FIG. 1A, which is a schematic block diagram of some exemplary bit toggles on data wires, using two's complement, while executing a machine learning model, according to some embodiments of the present disclosure.

For the sake of simplicity, 8-bit integers are shown, however the disclosure also applies to 4, 12, 16, 24, 32, 64, 256, or any number of bits that may be used in a system.

An exemplary sequence of weights, wherein the values are small in amplitude, however the sign changes frequently. In this example, the sequence of 4, -3, 2, and -5 account for s sequence of 6, 8, and 6 bit toggles therebetween.

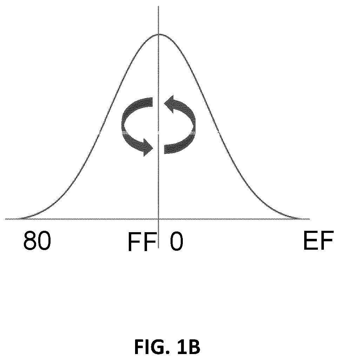

Reference is also made to FIG. 1B, which is a schematic graph representing an exemplary distribution of weights values in a machine learning model, using two's complement, according to some embodiments of the present disclosure.

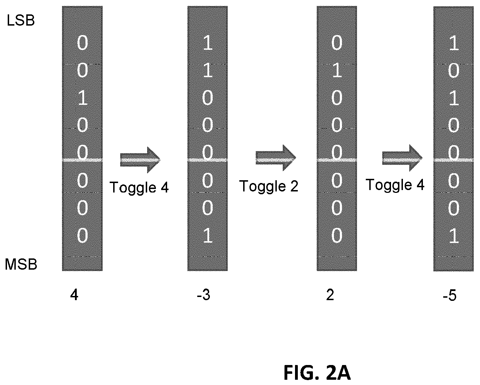

In many machine learning models, most of the parameters, are of small magnitude, and not evenly distributed along the range. In two's complement, most negative values may have the more significant bits as '1' and most positive values may have the more significant bits as '0'
Reference is now made to FIG. 2A which is a schematic block diagram of some exemplary bit toggles on data wires, using sign magnitude, while executing a machine learning model, according to some embodiments of the present disclosure.

An exemplary sequence of weights, wherein the values are small in amplitude, however the sign changes frequently. In this example, the sequence of 4,-3,2, and -5 account for s sequence of 4,2, and 4 bit toggles therebetween. The toggle count is reduced since the most significant bits other than the sign don't need to change in signed representation of small parameters.

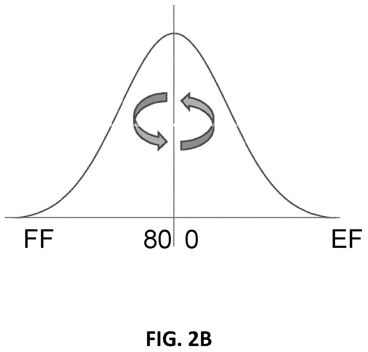

Reference is also made to FIG. 2B, which is a schematic graph representing an exemplary distribution of weights values in a machine learning model, using sign magnitude, according to some embodiments of the present disclosure.

Note that while the figure is very similar to FIG. 1B, the range of the negative integers is from FF for the largest to 80 to the smallest, rather than vice versa as in FIG. 1B. Thus, the more significant bits other than the sign bit may not change between small values.

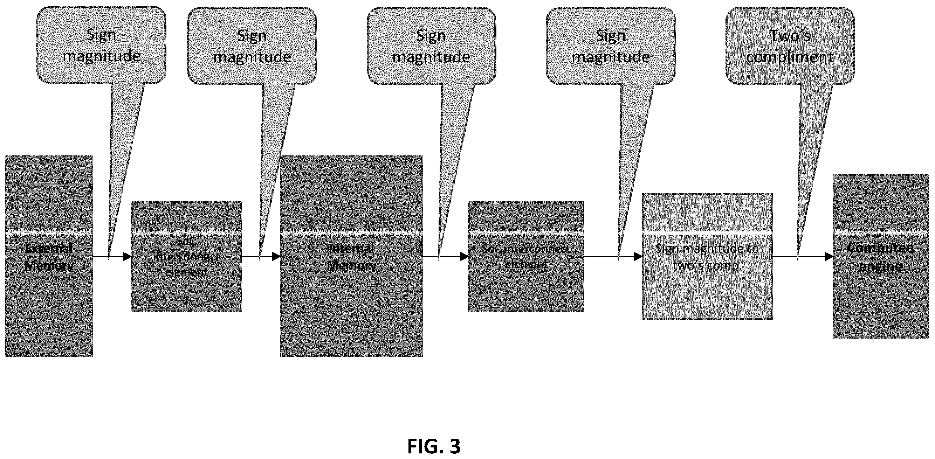

Reference is now made to FIG. 3, which is a schematic block diagram of an exemplary data transmission, on an exemplary system executing a machine learning model, according to some embodiments of the present disclosure.

Some embodiments of the present disclosure are processing apparatuses configured for executing a machine learning model, or other data intensive operations. These may be dedicated hardware or based on general purpose computing architectures, having at least one processing element set. Processing elements may be configured to execute instructions for processing integers in two's complement format, end comprise one or more memories, electronically connected to the computing unit, as well as external interfaces and/or other components.

Some embodiments of the present disclosure comprise one or more integer conversion modules for converting at least a part of integer data stored in the memory from integers in a sign magnitude format to integers in the two's complement format for the at least one processing element. The integer conversion module may be located in proximity to the computing unit, optionally directly connected to the at least one processing element.

A system architecture for running NN may include one or more memory devices, connectivity between the different memories and an execution unit. Weights may be stores in sign magnitude format in all memories and therefor bit toggling on the interconnect logic may be reduced. Proximally to the compute engine, where the arithmetic operations are executed, the weights may be converted back to two's complement format to keeps compatibility and ease of use.

Some embodiments of the present disclosure may place a sign magnitude to two's complement module between an interconnect element inside a system on a chip (SoC), and a compute engine such as a single instruction multiple data (SIMD) processor, however other location within or in proximity to a computation module may be used.

Sign magnitude format has two representations to 0 (+0 and -0) and maximum and minimum values are the same magnitude, for example +127 and -127 in 8 bit representation. Two's complement can represent numbers from -128 to +127 in an 8 bit representation. In order to maintain compatibility, when storing weights in sign magnitude format, the value -128 may be stores as -0. The sign magnitude to two's complement conversion may translate -0 to -128 so the weight representation may be the same as before the translation to sign magnitude.

Similarly, for 16 bits, the range may be -32768 to 32767 and -0 converted to -32768. Therefore, the negative representation of zero may be an exception stored as is in the memory in some embodiments, wherein the sign magnitude to two's complement element detects the negative representation of zero and converts it to the maximal negative number.

The descriptions of the various embodiments have been presented for purposes of illustration, but are not intended to be exhaustive or limited to the embodiments disclosed. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant machine learning models will be developed and the scope of the term neural network is intended to include all such new technologies a priori.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment may include a plurality of "optional" features unless such features conflict.

Throughout this application, various embodiments may be presented in a range format. It should be understood that the description in range format is merely for convenience and brevity and should not be construed as an inflexible limitation on the scope of embodiments. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of embodiments, which are, for clarity, described in the context of separate embodiments, may also be provided in combination in a single embodiment. Conversely, various features of embodiments, which are, for brevity, described in the context of a single embodiment, may also be provided separately or in any suitable subcombination or as suitable in any other described embodiment. Certain features described in the context of various embodiments are not to be considered essential features of those embodiments, unless the embodiment is inoperative without those elements.

It is intended to embrace embodiments that fall within the scope of the appended claims.

## Claims

1. A processing apparatus configured for executing a machine learning model and for storing non-uniformly distributed model parameters, comprising:
a computing unit comprising at least one processing element set, each of the at least one processing element set configured to execute instructions for processing integers in two's complement format;
a memory, electronically connected to the computing unit; and
an integer conversion module for converting at least a part of integer parameter data stored in the memory from integers in a sign magnitude format to integers in the two's complement format for the at least one processing element;
wherein the integer conversion module is located in proximity to the computing unit.

2. The processing apparatus of claim 1, wherein the integer conversion module is directly connected to the at least one processing element.

3. The processing apparatus of claim 1, wherein the negative representation of zero is an exception stored as is in the memory.

4. The processing apparatus of claim 1, wherein the sign magnitude to two's complement element detects the negative representation of zero and converts it to the maximal negative number.

5. A method for operating a machine learning models and for storing non-uniformly distributed model parameters, comprising:
providing a computing unit comprising at least one processing element set, each of the at least one processing element set configured to execute instructions for processing integers in two's complement format;
providing at least one memory, electronically connected to the computing unit; and
converting at least a part of integer parameter data stored in the memory from integers in a sign magnitude format to integers in the two's complement format for the at least one processing element;
wherein the integer conversion module is located in proximity to the computing unit.

6. The method of claim 5, wherein the integer conversion module is directly connected to the at least one processing element.

7. The method of claim 5, wherein the negative representation of zero is an exception stored as is in the at least one memory.

8. The method of claim 5, wherein the sign magnitude to two's complement element detects the negative representation of zero and converts it to the maximal negative number.

## Patentansprüche

1. Verarbeitungsvorrichtung, die zum Ausführen eines Maschinenlernmodells und zum Speichern nicht gleichförmig verteilter Modellparameter konfiguriert ist, umfassend:
eine Recheneinheit, umfassend mindestens einen Verarbeitungselementsatz, wobei jeder des mindestens einen Verarbeitungselementsatzes dazu konfiguriert ist, Anweisungen zum Verarbeiten von Ganzzahlen in einem Zweierkomplementformat auszuführen;
einen Speicher, der elektronisch mit der Recheneinheit verbunden ist; und
ein Ganzzahlumwandlungsmodul zum Umwandeln mindestens eines Teiles von Ganzzahlparameterdaten, die in dem Speicher gespeichert sind, von Ganzzahlen in einem Vorzeichengrößenformat in Ganzzahlen in dem Zweierkomplementformat für das mindestens eine Verarbeitungselement;
wobei sich das Ganzzahlumwandlungsmodul in der Nähe der Recheneinheit befindet.

2. Verarbeitungsvorrichtung nach Anspruch 1, wobei das Ganzzahlumwandlungsmodul unmittelbar mit dem mindestens einen Verarbeitungselement verbunden ist.

3. Verarbeitungsvorrichtung nach Anspruch 1, wobei die negative Darstellung von Null eine Ausnahme ist, die so wie vorhanden in dem Speicher gespeichert ist.

4. Verarbeitungsvorrichtung nach Anspruch 1, wobei das Vorzeichengröße-zu-Zweierkomplement-Element die negative Darstellung von Null detektiert und sie in die maximale negative Zahl umwandelt.

5. Verfahren zum Betreiben eines Maschinenlernmodells und zum Speichern nicht gleichförmig verteilter Modellparameter, umfassend:
Bereitstellen einer Recheneinheit, umfassend mindestens einen Verarbeitungselementsatz, wobei jeder des mindestens einen Verarbeitungselementsatzes dazu konfiguriert ist, Anweisungen zum Verarbeiten von Ganzzahlen in einem Zweierkomplementformat auszuführen;
Bereitstellen mindestens eines Speichers, der elektronisch mit der Recheneinheit verbunden ist; und
Umwandeln mindestens eines Teiles von Ganzzahlparameterdaten, die in dem Speicher gespeichert sind, von Ganzzahlen in einem Vorzeichengrößenformat in Ganzzahlen in dem Zweierkomplementformat für das mindestens eine Verarbeitungselement;
wobei sich das Ganzzahlumwandlungsmodul in der Nähe der Recheneinheit befindet.

6. Verfahren nach Anspruch 5, wobei das Ganzzahlumwandlungsmodul unmittelbar mit dem mindestens einen Verarbeitungselement verbunden ist.

7. Verfahren nach Anspruch 5, wobei die negative Darstellung von Null eine Ausnahme ist, die so wie vorhanden in dem mindestens einen Speicher gespeichert wird.

8. Verfahren nach Anspruch 5, wobei das Vorzeichengröße-zu-Zweierkomplement-Element die negative Darstellung von Null detektiert und sie in die maximale negative Zahl umwandelt.

## Revendications

1. Appareil de traitement configuré pour exécuter un modèle d'apprentissage automatique et pour stocker des paramètres de modèle non uniformément distribués, comprenant :
une unité de calcul comprenant au moins un ensemble d'éléments de traitement, chacun de l'au moins un ensemble d'éléments de traitement étant configuré pour exécuter des instructions pour traiter des entiers au format complément à deux ;
une mémoire, connectée électroniquement à l'unité de calcul ; et
un module de conversion d'entiers pour convertir au moins une partie de données de paramètres d'entiers stockées dans la mémoire d'entiers dans un format signe-magnitude vers des entiers dans le format complément à deux pour l'au moins un élément de traitement ;
dans lequel le module de conversion d'entiers est situé à proximité de l'unité de calcul.

2. Appareil de traitement selon la revendication 1, dans lequel le module de conversion d'entiers est directement connecté à l'au moins un élément de traitement.

3. Appareil de traitement selon la revendication 1, dans lequel la représentation négative de zéro est une exception stockée telle quelle dans la mémoire.

4. Appareil de traitement selon la revendication 1, dans lequel l'élément de signe-magnitude au complément à deux détecte la représentation négative de zéro et la convertit en nombre négatif maximal.

5. Procédé de fonctionnement de modèles d'apprentissage automatique et de stockage de paramètres de modèle non uniformément distribués, comprenant :
la fourniture d'une unité de calcul comprenant au moins un ensemble d'éléments de traitement, chacun des au moins un ensemble d'éléments de traitement étant configuré pour exécuter des instructions pour traiter des entiers au format complément à deux ;
la fourniture d'au moins une mémoire, connectée électroniquement à l'unité de calcul ; et
la conversion d'au moins une partie de données de paramètres d'entiers stockées dans la mémoire d'entiers dans un format signe-magnitude vers des entiers dans le format complément à deux pour l'au moins un élément de traitement ;
dans lequel le module de conversion d'entiers est situé à proximité de l'unité de calcul.

6. Procédé selon la revendication 5, dans lequel le module de conversion d'entiers est directement connecté à l'au moins un élément de traitement.

7. Procédé selon la revendication 5, dans lequel la représentation négative de zéro est une exception stockée telle quelle dans l'au moins une mémoire.

8. Procédé selon la revendication 5, dans lequel l'élément de signe-magnitude au complément à deux détecte la représentation négative de zéro et la convertit en nombre négatif maximal.
